# EUROPÄISCHE PATENTSCHRIFT

(11) **EP 0 634 532 B1**
(45) Veröffentlichungstag und Bekanntmachung des Hinweises auf die Patenterteilung: **10.03.1999**
(21) Anmeldenummer: 94109574.7
(22) Anmeldetag: 21.06.1994
(51) Int. Cl.: E04B 1/68, F16L 21/03

(54) **Dichtungseinrichtung an einem Bauteil**
Sealing arrangement on a structural member
Arrangement pour joint d'étanchéité pour élément de construction

(30) Priorität: 15.07.1993 DE 4323734
(43) Veröffentlichungstag der Anmeldung: 18.01.1995
(73) Patentinhaber: Georg Prinzing GmbH & Co. KG Betonformen- und Maschinenfabrik, 89143 Blaubeuren (DE)
(72) Erfinder: Kraiss, Richard, D-89150 Laichingen (DE)
(74) Vertreter: Kratzsch, Volkhard, Dipl.-Ing.

(56) Entgegenhaltungen:
- EP-A- 0 358 256
- EP-A- 0 449 082
- DE-A- 3 414 180
- DE-A- 4 133 763
- DE-A- 4 202 005

## Beschreibung

Die Erfindung bezieht sich auf eine Dichtungseinrichtung an einem Bauteil, insbesondere Formteil, aus z.B. Beton, Polymerbeton, Faserbeton od.dgl., z.B. Straßen- oder Hofablauf, Schachtring, Schachthals, Schornsteinelement, Wand- oder Mauerelement, Rohr, Vortriebsrohr, Benzinabscheider od.dgl., mit den Merkmalen im Oberbegriff des Anspruchs 1.

Es ist eine Dichtungseinrichtung der eingangs genannten Art bekannt (DE-A-34 14 180, Fig. 13), die ein innen hohles Ringelement aufweist, welches in einer unterseitigen Aufnahmenut eines oberen Bauteils derart aufgenommen ist, daß das Ringelement über die untere Stirnseite dieses oberen Bauteiles übersteht mit einem aus Vollmaterial bestehenden Wandungsteil. Das Ringelement ist bei der Herstellung des Bauteiles in dieseseinbetoniert worden. Es ist derart tief in der Aufnahmenut angeordnet, daß es zumindest im wesentlichen nur mit Druckkräften belastet ist. Insbesondere bei der Herstellung des Ringelements aus Gummi ist die Belastung der einzelnen Gummiwände gering, da das Ringelement mit drei Wandteilen innerhalb der Aufnahmenut aufgenommen und abgestützt ist. Das Ringelement ist nur mit Druckkräften belastet und kann auch nur solche aufnehmen.

Aus der DE-A-4 133 763 ist eine Dichteinrichtung als Teil einer Rohrmuffendichtung zwischen zwei Betonrohren bekannt, die eine im wesentlichen zylindrische Dichtfläche an der inneren Oberfläche einer Muffe und eine ebenso im wesentlichen zylindrische Dichtfläche an der äußeren Oberfläche eines glatten Endes aufweist, wobei die beiden Dichtflächen einander gegenüberstehen und konzentrisch angeordnet sind unter Bildung eines ringförmigen, im wesentlichen gleichförmigen Dichtraumes. In diesem Dichtraum ist ein Dichtring aus elastischem Material angeordnet, der mittels eines schwalbenschwanzförmigen Befestigungsbereichs in die innere Oberfläche der Muffe eingeformt ist. Der Dichtring weist einen festen Bereich auf, der radial zwischen den beiden Dichtflächen gestaucht wird. Außerdem weist der Dichtring einen nicht festen Bereich mit sich außenseitig erstreckenden Räumen auf, der einen axial vom Dichtbereich nach innen gerichteten Schutzbereich bildet, welcher in radialer Richtung leicht stauchbar sein soll. Bei dem Dichtring handelt es sich um eine reine Kompressionsdichtung, die allein radial als Ausgleichs- und Dichtelement wirkt, welches bei der Ausgleichsfunktion aufgrund von Hohlräumen sich im Querschnitt verringert und dabei diesbezüglich keinerlei Stützwirkung entfalten kann.

Aus der älteren, nicht vorveröffentlichten DE-A-42 02 005 ist eine Dichtungseinrichtung bekannt, bei der der Ausgleichskörper ein separates Element darstellt, das erst dann bereitgestellt und eingesetzt wird, wenn die Bauteile aneinandergesetzt werden sollen, z.B. daraus ein vertikaler Schacht errichtet werden soll. Bei der Herstellung der Bauteile, insbesondere Betonformteile, werden im Bereich der jeweiligen Bauteilenden Nuten od.dgl. Aufnahmen geformt, in denen später beim Aufeinandersetzen der Bauteile die Dichtungseinrichtung aufgenommen werden soll. Es hat sich gezeigt, daß während der Herstellung der Bauteile, insbesondere Betonformteile, beim Einarbeiten der Nuten od.dgl. Aufnahmen für die Dichtungseinrichtung in diesem Bereich Hohlräume, Lunker und dergleichen Oberflächenunebenheiten entstehen. Auch Formabweichungen sind nicht auszuschließen. Diese Fehlstellen, z.B. Lunker, Löcher oder ähnliches, im Bereich der später beim Zusammensetzen mit den Dichtungseinrichtungen in Berührung gelangenden Flächen werden zumindest in Grenzen von den Dichtungseinrichtungen ausgeglichen. Dabei kommt es aber vor, daß dadurch bereits das der jeweiligen Dichtungseinrichtung innewohnende Ausgleichsvermögen erschöpft wird und nicht mehr für einen etwaigen weiterhin notwendigen Ausgleich zur Verfügung steht, der zwischen dem anderen Bauteil und der Dichtungseinrichtung beim Aneinandersetzen der Bauteile erforderlich ist.

Der Erfindung liegt die Aufgabe zugrunde, eine Dichtungseinrichtung der eingangs genannten Art so auszubilden, daß diese nicht nur ein möglichst großes Ausgleichsvermögen hat, sondern daß der Ausgleichskörper von Dichtaufgaben entlastet ist und diese einem anderen Bereich der Dichtungseinrichtung zugewiesen werden, wobei die Dichtungseinrichtung zugleich als Komplettelement für das Einarbeiten in das Bauteil zur Verfügung steht.

Die Aufgabe ist bei einer Dichtungseinrichtung der im Überbegriff des Anspruchs 1 definierten Art gemäß der Erfindung durch die Merkmale im Anspruch 1 gelöst. Weitere vorteilhafte Erfindungsmerkmale und Ausgestaltungen ergeben sich aus den Ansprüchen 2 bis 19. Hierdurch werden folgende Vorteile erreicht. Der bereits bei der Formgebung des Bauteiles eingearbeitete mindestens eine Ausgleichskörper hat bei dieser Einarbeitung selbst noch keinen Ausgleich vorzunehmen. Vielmehr paßt sich das Material des zu formenden Bauteiles an den Ausgleichskörper an, ohne daß diesbezüglich somit ein Teil des Ausgleichsvermögens des Ausgleichskörpers schon aufgezehrt wird. Der Ausgleichskörper, in das Bauteil eingearbeitet, verfügt dann, wenn einzelne Bauteile z.B. aufeinandergesetzt werden, somit noch über sein volles Ausgleichsvermögen. Er ist somit in der Lage, im Kontaktbereich zwischen dem Ausgleichskörper und benachbarten Flächen eines zweiten Bauteils einen Ausgleich über einen weiten Bereich zu ermöglichen. Das im Hohlraum des Ausgleichskörpers enthaltene nicht kompressible Material bietet somit ein hohes Ausgleichsvermögen. Dort hingegen, wo der Ausgleichskörper bei der Herstellung des Bauteiles bereits Berührung mit dem Material des Bauteiles hat, ist eine gleichmäßige Anlage gewährleistet und somit dadurch eine gleichmäßige Lastverteilung bei übereinanderstehenden Bauteilen erreicht. Dabei versteht es sich, daß der Ausgleichskörper dann, wenn für die Abdichtung ein weiteres Dichtungselement vorhanden ist, z.B. allein die Funktion eines Ausgleichselements zur Vermeidung von etwaigen Punktlasten und deren Folgen übernehmen kann und keine Dichtungsfunktion ausübt. Statt dessen kann der Ausgleichskörper aber auch zusätzlich zur Funktion eines Druckausgleichs in radialer und/oder axialer Richtung auch noch die Funktion einer Dichtung übernehmen. Bei z.B. zumindest drei symmetrisch plazierten Einzelelementen des Ausgleichskörpers werden die Vertikalkräfte bzw. Druckkräfte über drei Flächen übertragen, wobei diese zweckmäßigerweise so bemessen sind, daß die Flächenpressung nicht zu hoch wird. In den Bereichen, wo kein Einzelelement und somit kein Lastübertragungselement vorhanden sind, besteht zwischen den Stoßflächen ein gewisser Sicherheitsabstand, so daß dort Unebenheiten nicht aneinanderstoßen und keine Punktlasten entstehen können. Drei Lastübertragungsflächen haben den Vorteil, daß die Last auf die drei Flächen gleichmäßig verteilt ist.

Weitere vorteilhafte Erfindungsmerkmale und Ausgestaltungen ergeben sich aus den Ansprüchen 20 bis 24. Dadurch wird die druckausgleichende Wirkung des mindestens einen Ausgleichskörpers noch gesteigert. Der eine Hohlraum mit darin enthaltener Füllung, z.B. der obere Hohlraum, ermöglicht aufgrund seiner Füllung, die aus einer plastischen Masse, aus Flüssigkeit oder dergleichen bestehen kann, einen besonders guten Druckausgleich, weil sich diese Füllung in diesem Hohlraum besonders leicht und gut verteilt. Zugleich ist von Vorteil, daß in diesem Bereich eine etwaige zulässige Toleranzabweichung in der Ebenheit des Bauteils besonders gut und somit komplett ausgeglichen wird. Der andere, z.B. untere, Hohlraum kann mit einer anderen Füllung, z.B. aus einer körnigen Masse, z.B. aus Sand, oder statt dessen auch aus Kitt, einer kittartigen Masse oder dergleichen plastischen Masse versehen sein, wobei dieser Hohlraum die Lastübertragung übernimmt.

Gegenstand der Erfindung ist ferner ein Schachtring mit einer integrierten Dichtungseinrichtung genannter Art nach einem oder mehreren der vorangehenden Ansprüche.

Die Erfindung ist nachfolgend anhand von in den Zeichnungen gezeigten Ausführungsbeispielen näher erläutert. Es zeigen:
- Fig. 1: einen schematischen Schnitt des unteren Bereichs eines Betonformteiles mit einbetonierter Dichtungseinrichtung, noch ruhend auf einem formgebenden Ringteil, gemäß einem ersten Ausführungsbeispiel,
- Fig. 2: einen schematischen Schnitt zweier vertikal aneinanderstoßender Betonformteile, mit einer im Stoßbereich angeordneten Dichtungseinrichtung gemäß Fig. 1,
- Fig. 3: einen schematischen Schnitt zweier vertikaler aneinanderstoßender Betonformteile, etwa entsprechend Fig. 2, mit einer im Stoßbereich angeordneten Dichtungseinrichtung gemäß einem zweiten Ausführungsbeispiel.

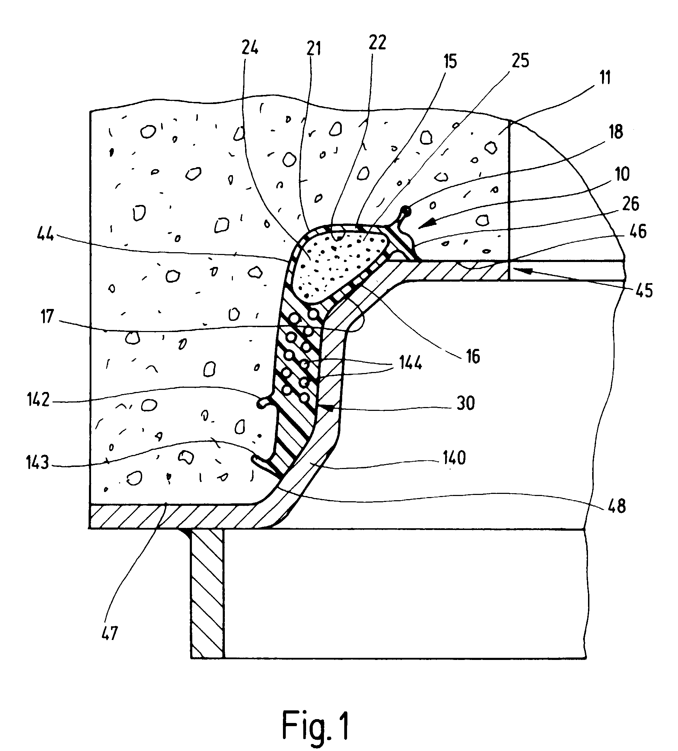

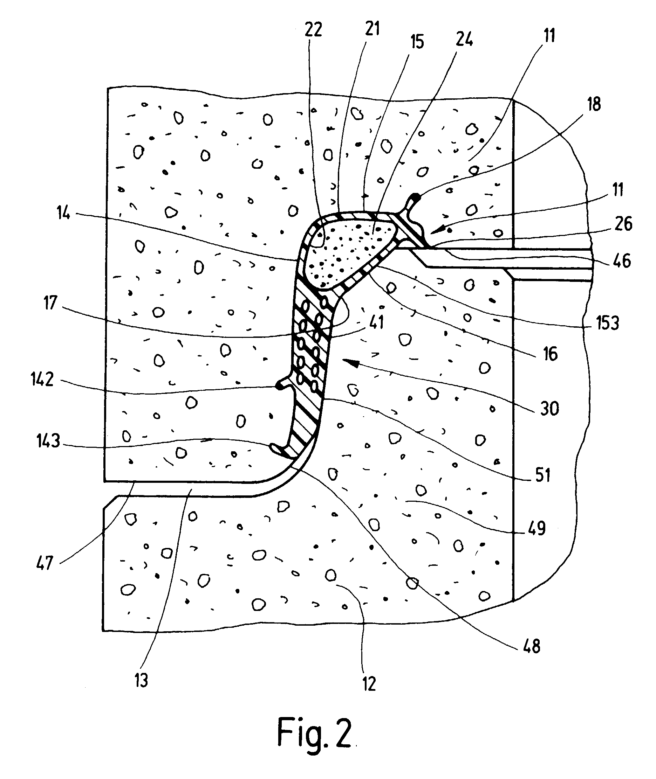

In Fig. 1 und 2 ist ein erstes Ausführungsbeispiel einer Dichtungseinrichtung 10 gezeigt, die für aneinanderstoßende Bauteile 11 und 12 bestimmt ist, die hier als Formteile, z.B. aus Beton, Polymerbeton, Faserbeton od.dgl., ausgebildet sind. Insbesondere ist die Dichtungseinrichtung 10 für etwa vertikal aneinanderstoßende Bauteile 11 und 12 vorgesehen. Die Bauteile 11 und 12 können nahezu beliebiger Art sein, z.B. Straßen- oder Hofabläufe, Schachtringe, Schachthälse, Schornsteinelemente, Wand- oder Mauerelemente, Rohre, Vortriebsrohre, Benzinabscheider od. dgl., die mit Vorzug übereinander versetzt werden, so daß für den Anpreßdruck der einzelnen Bauteile 11 und 12 an die an einer Stelle im Stoßbereich angeordnete Dichtungseinrichtung 10 stets die Gewichtskraft der Bauteile, insbesondere des oberen Bauteiles 11, zur Verfügung steht. Die Dichtungseinrichtung 10 wird unter dem Gewichtseinfluß des oberen Bauteiles 11, das auf die Dichtungseinrichtung 10 drückt, durch entsprechende Kompression bedarfsweise verformt unter selbsttätiger Formanpassung.

Die Dichtungseinrichtung 10 weist zumindest einen in dieser Weise durch Kompression verformbaren Ausgleichskörper 21 auf, der Wandungen aus verformungsfähigem Material, z.B. aus elastischem Gummi, Kunstgummi, einem elastomeren Kunststoff od.dgl., aufweist. Der Ausgleichskörper 21 ist z.B. aus einem Strangprofil gebildet. Sind die Bauteile 11, 12, rotationssymmetrisch, z.B. Schachtringe, so ist der Ausgleichskörper 21 als geschlossener Ringteil 41 ausgebildet. Der Ausgleichskörper 21 enthält im Inneren zumindest einen in sich geschlossenen inneren Hohlraum 22. Die den Hohlraum 22, im Schnitt betrachtet, allseits begrenzenden Wandungsteile 14,15 und 16 des Ausgleichskörpers 21 sind verformungsfähig. Der Hohlraum 22 enthält eine möglichst gleichmäßige Füllung 24 aus nicht kompressiblem Material. Die Füllung 24 ist z.B. aus einer solchen Masse 25 gebildet, die unter leichtem äußeren Druck innerhalb des Hohlraumes 22 des Ausgleichskörpers 21 in allen Richtungen beweglich ist und fließen kann, bei erhöhtem äußeren Druck sich aber z.B. etwa wie ein starrer Kern verhält, der ohne weitere Verformung oder FLießbewegung hohe Kräfte formschlüssig als fester Kern übertragen kann. Die Masse 25 ist somit bei hohem äußeren Druck zumindest im wesentlichen vollkommen starr.

Die Füllung 24 kann z.B. aus einer fließfähigen und körnigen Masse 25 gebildet sein. Bei einer solchen Masse 25 sind bei leichtem äußeren Druck gute Fließeigenschaften vorhanden, wobei diese Masse 25 aufgrund der Unverformbarkeit, vorzugsweise einer großen Härte, ihrer Komponenten bei hohem Druck große Kräfte übertragen kann. Die Wandungsteile 14 bis 16 können aus durchsichtigem oder zumindest durchscheinendem Material bestehen, so daß man die Füllung 24 im Inneren erkennen und überprüfen kann.

Die Masse 25 kann aus einem Granulat gebildet sein. Die Körner der Masse 25 sind z.B. rund, vorzugsweise kreisrund, so daß bei leichtem äußeren Druck gute Fließeigenschaften vorhanden sind. Dabei sind die Körner der Masse 25 hart und unverformbar, so daß bei hohem äußeren Druck in beschriebener Weise ein starrer Kern entsteht und dadurch große Kräfte übertragen werden können. Die Masse 25 ist z.B. aus Quarzsand gebildet. Dieser ist nicht kompressibel und kann große Kräfte übertragen. Außerdem ist Quarzsand außerordentlich kostengünstig und umweltfreundlich. Er steht in beliebiger Menge jederzeit zur Verfügung. Die Korngröße der Körner der Masse 25, insbesondere einer Quarzsandfüllung, kann etwa 1 mm bis 3 mm betragen. Bei dieser Korngröße ist eine möglichst gleichmäßige Kraftverteilung auf die elastischen Wandungsteile 14 bis 16 des Ausgleichskörpers 21 gewährleistet. Statt dessen kann die Masse 25 auch aus einer plastischen Masse, z.B. aus Kitt oder aus einer kittartigen Masse, bestehen.

Der Ausgleichskörper 21 ist bereits bei der Formgebung des in Fig. 2 oberen Bauteiles 11, insbesondere des Betonformteils, in das Material dieses Bauteiles 11 eingearbeitet, insbesondere einbetoniert. Dabei ist der Ausgleichskörper 21 zumindest im wesentlichen flächenbündig im Bauteil 11 eingearbeitet. Der Ausgleichskörper 21 kann entweder nur als Ausgleichselement oder nur als Dichtkörper oder als Element, das beide Funktionen in sich vereint, eingesetzt sein. Von Vorteil kann es z.B. sein, wenn je Einzelfall der Ausgleichskörper 21 als reines Ausgleichselement zur Vermeidung von Punktlasten und deren Folgen wirksam und eingesetzt ist. Es ist vorteilhaft, wenn, wie in Fig. 1 und 2 gezeigt ist, zusätzlich zum Ausgleichskörper 21 noch eine Kompressionsdichtung 30 ebenfalls im Stoßbereich 13 zwischen den Bauteilen 11 und 12 vorgesehen ist, die bei rotationssymmetrischen Bauteilen 11, 12 aus einem Dichtungsring besteht. Auch wenn der Ausgleichskörper 21 als Ausgleichselement zur Vermeidung von Punktlasten und deren Folgen fungiert, bedeutet dies natürlich nicht, daß nicht auch der Ausgleichskörper 21 zusätzlich eine Dichtfunktion erfüllt.

Der Ausgleichskörper 21 ist derart in das Bauteil 11 bei dessen Formgebung eingearbeitet, insbesondere einbetoniert, daß der Ausgleichskörper 21 mit seiner freiliegenden Außenfläche 17 einen Flächenteil der bauteilseitigen Endfläche, z.B. Dicht- und/oder Sitzfläche, bildet. Der Ausgleichskörper 21 ist im Bereich einer etwa horizontalen Stirnfläche 46 des Bauteils 11 eingearbeitet, wobei es sich hier um die innen verlaufende Stirnfläche 46 handelt.

Bei einem anderen, nicht gezeigten Ausführungsbeispiel ist der Ausgleichskörper 21 statt dessen im Bereich der außen verlaufenden anderen etwa horizontalen Stirnfläche 47 des Bauteils 11 eingearbeitet.

Ersichtlich ist der Ausgleichskörper 21 im Querschnitt zumindest annähernd dreieckförmig gestaltet, wobei zumindest der Bereich des Ausgleichskörpers 21, der sich entsprechend den beiden Schenkeln des Dreiecks erstreckt, also zumindest der Bereich mit den Wandungsteilen 14 und 15, im Bauteil 11 eingearbeitet ist. Hingegen ist der Bereich, der sich entsprechend der Basis des Dreiecks erstreckt, mithin der Wandungsteil 16, der dem Bauteil 11 abgewandt ist und die Außenfläche 17 bildet, nicht in das Material des Bauteils 11 eingearbeitet. Dieser Wandungsteil 16 liegt frei, so daß dessen Außenfläche 17 für den Kontakt mit dem darunterliegenden Bauteil 11 und die Ausgleichs- und/oder Dichtfunktion zur Verfügung steht.

Wie aus Fig.2 ersichtlich ist, ist der Ausgleichskörper 21 beim oberen Bauteil 11 an dessen unterem Ende, insbesondere der dort geformten Glocke oder Muffe oder Wandverdickung, bei der Herstellung des Bauteils 11 eingearbeitet, insbesondere integriert und einbetoniert. In gleicher Weise ist auch das Bauteil 12 am hier nicht sichtbaren unteren Ende mit einer bei der Herstellung eingearbeiteten, integrierten Dichtungseinrichtung 10, insbesondere einem Ausgleichskörper 21, gleicher Art versehen.

Dies schließt aber nicht aus, daß bedarfsweise der Ausgleichskörper 21 statt dessen auch am gegenüberliegenden Ende des Bauteils 11 bzw. 12 bei dessen Herstellung eingearbeitet sein kann.

Der Ausgleichskörper 21 weist am in das Bauteil 11 einbetonierten Bereich zumindest einen Verankerungsteil 18 auf, der beim Einarbeiten in das Material des Bauteiles 11 eingearbeitet, insbesondere einbetoniert, wird. Der Verankerungsteil 18 ist mit dem Ausgleichskörper 21 einstückig und kann aus Vorsprüngen, Rippen, Leisten, Lippen od.dgl. bestehen. Gemäß Fig. 2 ist der Verankerungsteil 18 am dem Stoßbereich 13 abgewandten Ende verdickt ausgebildet, so daß sich im Querschnitt etwa Pilz form oder T-Profil ergibt. Dies verstärkt die sichere und feste Einbindung in das Material des Bauteils 11.

Der Ausgleichskörper 21 weist an seiner Außenseite, z.B. nahe der Außenfläche 17, zumindest eine verformbare Dichtlippe 26 auf, die einstückig mit dem Ausgleichskörper 21 ist. Ihre Funktion und Vorteile werden später noch erläutert. Ersichtlich ist der Ausgleichskörper 21 etwa schlauchartig ausgebildet.

Vor der Einarbeitung des Ausgleichskörpers 21 in das Bauteil 11 wird der Ausgleichskörper 21 als fertiger Ringteil 41 auf eine Untermuffe 140 aufgezogen, die bei der Herstellung des Bauteils 11 in einer Form der Formgebung der Glocke oder Muffe am unteren Ende des Bauteiles 11 dient, insbesondere der Formgebung der stufenförmigen und ringförmigen Endfläche 45, die sich aus der inneren, etwa horizontalen Stirnfläche 46, der äußeren, etwa horizontalen Stirnfläche 47 und einer dazwischen verlaufenden Innenfläche 48, z.B. Keilfläche, des Bauteils 11 zusammensetzt. Der Ausgleichskörper 21 ist bei rotationssymmetrischer Gestaltung als Ringteil 41 im Durchmesser zumindest geringfügig kleiner bemessen als die Untermuffe 140 Der auf die Untermuffe 140 aufgezogene Ausgleichskörper 21 ist dadurch mit Vorspannung und gleichzeitiger Abdichtung auf der Untermuffe gehalten. Dadurch wird bei der Herstellung des Betonteils 11 und beim Einbetonieren des Ausgleichskörpers 21 verhindert, daß etwaiger Beton zwischen die Untermuffe und den Ausgleichskörper 21 gelangt.

Bei der Formgebung des Bauteils 11, insbesondere eines Betonformteiles, in einer Form wird der in den Formraum eingefüllte Beton insbesondere durch Rütteln verdichtet. Beim Einrütteln des Betons wird der Ausgleichskörper 21 mit allen dem Beton zugewandten Flächen in das Betonmaterial einbetoniert, wobei sich das Betonmaterial an den Verlauf und die Oberfläche des Ausgleichskörpers 21 anpaßt. Der Ausgleichskörper 21 muß also seinerseits zum Herbeiführen einer guten Anlage und Anpassung keinerlei Ausgleichsvermögen, welches ihm innewohnt, beitragen. Vielmehr paßt sich der Beton bei der Formgebung des Bauteils 11 an den Ausgleichskörper 21 an. Dieser wird gut und fest im Bauteil 11 verankert. Bei der Formgebung wird die elastische Dichtlippe 26, die auf der Oberseite der Untermuffe 140 aufliegt, unter elastischer Verformung zusätzlich darauf angedrückt. Dadurch ist in diesem Randbereich ein etwaiges Unterkriechen von Beton, Zementmilch od.dgl. und Hineingelangen in den Bereich zwischen der Untermuffe und dem Ausgleichskörper 21 zuverlässig verhindert.

Ist das Bauteil 11 in der Form fertiggeformt, erfolgt in üblicher Weise die Entformung des Bauteils 11, noch auf der Untermuffe 140 ruhend, mit anschließendem Abtransport zum Abbindeplatz. Auch hierbei ruht das Bauteil 11 noch auf der Untermuffe.

Das in Fig. 2 hinsichtlich des Bauteils 11 nicht sichtbare und nur beim darunter befindlichen Bauteil 12 gezeigte oberseitige Spitzende 49 ist an den Verlauf der Endfläche 45 des Bauteils 11 mit einbetoniertem Ausgleichskörper 21 angepaßt. Die Kompressionsdichtung 30 liegt einerseits an der Ringfläche 51 und andererseits an der Innenfläche 48 an. Die Innenfläche 48 und die Ringfläche 51 können etwa keilförmig verlaufen, so daß aufgrund des Gewichts des Bauteiles 11 die Kompressionsdichtung 30 radial stärker zusammengedrückt und an die Innenfläche 48 und Ringfläche 51 dichtend angepreßt wird. Das Bauteil 11 ruht in vertikaler Richtung mit dem einbetonierten Ausgleichskörper 21 auf der Oberseite des Bauteils 12. In diesem Bereich kann eine gewichtskraftabhängige zusätzliche Abdichtung mittels des Ausgleichskörpers 21 erfolgen. Außerdem und vor allem ermöglicht der Ausgleichskörper 21 einen Ausgleich zwischen den beiden Betonteilen 11 und 12, insbesondere einen Druckausgleich in vertikaler Richtung. Für den Ausgleich steht das gesamte Ausgleichsvermögen des Ausgleichskörpers 21 zur Verfügung.

Im zusammengesetzten Zustand der Bauteile 11 und 12 erstreckt sich die Kompressionsdichtung 30 im Bereich der von der etwa horizontalen Stirnfläche 46 überleitenden Innenfläche 48, z.B. Keilfläche, des Bauteils 11, wo keine Stufe vorhanden ist, so daß durch die Gewichtskraft des Bauteils 11 und evtl. weiterer darüber befindlicher Bauteile und z.B. aufgrund des keilförmigen Verlaufs der Innenfläche 48 die Kompressionsdichtung 30 radial nach innen stärker zusammengedrückt wird.

Der Ausgleichskörper 21 ist in einer im Gegenuhrzeigersinn annähernd um etwa 45° gedrehten Position eingeformt und somit zumindest zum Teil im Bereich sowohl der horizontalen Stirnfläche 46 als auch der daran anschließenden, etwa vertikal verlaufenden Innenfläche 48, insbesondere Keilfläche, des Bauteils 11 eingearbeitet. Insbesondere ist der Ausgleichskörper 21 zumindest zum Teil im Eckbereich eingearbeitet, und zwar dort, wo die etwa horizontale Stirnfläche 46 und die etwa vertikal verlaufende Innenfläche 48, insbesondere Keilfäche, aufeinandertreffen. Wie Fig. 1 und 2 zeigen, verläuft der eine Wandungsteil 14 dabei etwa vertikal und der andere Wandungsteil 15 etwa horizontal, während der die Basis des Dreiecks bildende Wandungsteil 16, der die Außenfläche 17 bildet, schräg zur etwa horizontalen Stirnfläche 46 verläuft, derart, daß die Außenfläche 17 im Eckbereich schräg gerichtet ist.

Bei einem anderen, nicht gezeigten Ausführungsbeispiel ist der Ausgleichskörper im Bereich der etwa vertikalen, von der inneren Stirnfläche 46 zur äußeren Stirnfläche 47 überleitenden Innenfläche 48, insbesondere Keilfläche, des Bauteils 11 eingearbeitet. Wie Fig. 1 zeigt, ist die Innenfläche 48, insbesondere Keilfläche, in vertikaler Richtung nicht durchgehend gerade, sondern sie hat einen zumindest schwach etwa S-förmigen Verlauf, im Querschnitt betrachtet.

Der eine Verankerungsteil 18 des Ausgleichskörpers 21 befindet sich hier etwa im Eckbereich der Wandungsteile 15 und 16, wo auch die Dichtlippe 26 abstrebt.

Die Untermuffe 140, die der Formgebung der Glocke oder Muffe am unteren Ende des Bauteiles 11 mit Einarbeitung des Ausgleichskörpers 21 dient, weist eine obere, innere sowie eine untere, äußere Stirnfläche auf, die der Formgebung der Stirnflächen 46 und 47 dienen, wobei die Untermuffe 140 zwischen diesen beiden Stirnflächen einen zumindest schwach S-förmigen Verlauf hat, zur Formgebung der entsprechend verlaufenden Innenfläche 48.

Die Kompressionsdichtung 30 ist mit dem Ausgleichskörper 21 einstückig und bei der Formgebung des Bauteiles 11 zusammen mit diesem eingearbeitet, insbesondere einbetoniert. Diese einstückige Kompressionsdichtung 30 weist damit einstückige Verankerungsteile 142, 143 auf, die dem Verankerungsteil 18 entsprechen können, jedoch zusammen ein etwa C bilden. Bei einem nicht gezeigten Ausführungsbeispiel kann diese mit dem Ausgleichskörper 21 einstückige Kompressionsdichtung 30 bedarfsweise auch noch mindestens eine Dichtlippe aufweisen.

Die Kompressionsdichtung 30 enthält zumindest auf einem Querschnittsteil, z.B. auf dem Querschnittsteil, der an den Eckbereich zwischen der Wandung 14 und 16 anschließt, innere Hohlräume 144. Diese Hohlräume 144 machen es möglich, daß das Material der Kompressionsdichtung 30 beim Zusammensetzen der Bauteile 11, 12 ausweichen kann, wobei dieser Teil der Kompressionsdichtung 30 dann im Querschnitt schmaler wird.

In Fig. 1 und 2 ist beim unteren Bauteil 12 dessen oberes Spitzende 49 hinsichtlich des Flächenverlaufs ziemlich genau an den Flächenverlauf der am unteren Ende des oberen Bauteils 11 geformten GLocke oder Muffe unter Einbeziehung des darin eingearbeiteten Ausgleichskörpers 21 angepaßt. Im Stoßbereich 13 ist jedoch keine Anlage des Spitzendes 49 an den Stirnflächen 46 und 47 des oberen Bauteils 11 gegeben, die oberhalb und in Abstand davon verlaufen. Das Spitzende 49 weist eine an die obere Stirnfläche anschließende Schrägfläche 153 auf, die etwa dem Schrägverlauf des Wandungsteils 16 des Ausgleichskörpers 21 entspricht und somit etwa unter 45° zur etwa horizontalen, daran anschließenden inneren Stirnfläche des Spitzendes 49 verläuft. An diese Schrägfläche 153 schließt sich die zumindest annähernd vertikal, insbesondere etwa keilförmig, verlaufende Ringfläche 51 des Bauteils 12 an.

Beim Aufsetzen des Bauteils 11 auf das Bauteil 12 liegt der Ausgleichskörper 21 mit dem Wandungsteil 16 auf der Schrägfläche 153 auf. Außerdem liegt die Kompressionsdichtung 30 mit ihrer freien Außenfläche an der z.B. etwa keilförmig verlaufenden Ringfläche 51 des Spitzendes 49 an.

Ein eigenständiges, die Kompressionsdichtung bildendes Element wird nicht benötigt. Somit ist das Bauteil 11 mit bei der Herstellung gleich einbetonierter Dichtungseinrichtung 10 gleich einbaufertig. Es müssen keine zusätzlichen Elemente zur Herstellung der Dichtung mitgeliefert werden. Somit besteht auch keine Gefahr der Verwechslung der Elemente. Auch hier steht aufgrund der Einarbeitung, insbesondere Einbetonierung, der Dichtungseinrichtung 10 schon bei der Herstellung des Bauteils 11 das gesamte Ausgleichsvermögen der Dichtungseinrichtung 10 voll zum Ausgleich zur Verfügung. Durch die besondere Anordnung des Ausgleichskörpers 21 im Eckbereich mit Schrägverlauf des Wandungsteils 16 und entsprechendem Schrägverlauf der Schrägfläche 153 des Spitzendes 49 ist erreicht, daß vom Ausgleichskörper 21 nicht nur axiale Kräfte, sondern auch radial gerichtete Kräfte aufgenommen werden, z.B. bedingt durch Erddruck, der auf einem vertikal errichteten Schacht lastet. Dadurch ist erreicht, daß die einzelnen Bauteile 11, 12 sich in Radialrichtung nicht relativ zueinander verschieben. Die Dichtungseinrichtung 10, die nur aus einem einzigen Ringteil 41 besteht, ist einfach, kostengünstig, leicht bereits bei der Herstellung einzubetonieren und in hohem Maße wirkungsvoll. Dabei kann ein Großteil der Dichtwirkung von der Kompressionsdichtung 30 erfüllt werden, während der Ausgleichskörper 21 die Funktion des Druckausgleichs in axialer und/oder radialer Richtung übernimmt, wobei außerdem der Ausgleichskörper 21 zusätzlich Dichtfunktion hat.

Erfindungsgegenstand ist auch ein Schacht entsprechend Fig. 2, der aus den mindestens zwei übereinander stehenden Bauteilen 11,12 mit Dichtungseinrichtungen 10 daran gebildet ist.

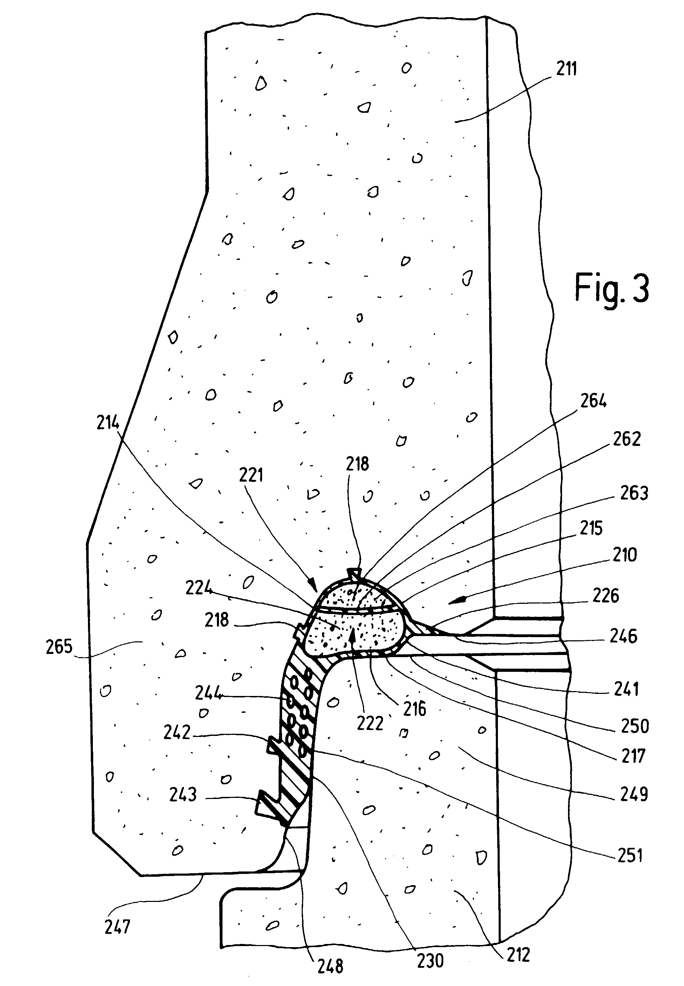

Bei dem in Fig. 3 gezeigten zweiten Ausführungsbeispiel sind für die Teile, die den vorangegangenen Ausführungsbeispielen entsprechen, um 200 größere Bezugszeichen verwendet, so daß dadurch zur Vermeidung von Wiederholungen auf die Beschreibung der vorangehenden Ausführungsbeispiele Bezug genommen ist.

Beim Ausführungsbeispiel in Fig. 3 steht die Dichtungseinrichtung 210 mit dem mindestens einen Ausgleichskörper 221 und der Kompressionsdichtung 230 über die innere Stirnfläche 246 sowie die Innenfläche 248 des oberen Bauteils 211 über, so daß durch dieses Überstandsmaß bereits ein Abstand von der zugeordneten Stirnfläche 250 bzw. Ringfläche 251 des darunter befindlichen Bauteils 212 vorgegeben ist. Das Ende des Bauteils 211, in dessen Bereich die Dichtungseinrichtung 210 angeordnet ist, weist einen größeren Querschnitt als der darüber befindliche Bereich auf. So ist das untere Ende des Bauteils 211 z.B. mit einer entsprechenden Wandverdickung 265 versehen.

Der mindestens eine Ausgleichskörper 221 weist in Fig. 3 zumindest zwei innere Hohlräume 222 und 262 auf, die durch eine Wandung 263 getrennt sind und unterschiedliche Füllungen 224, 264 enthalten. Die Wandung 263 ist verformungsfähig, vorzugsweise aus dem gleichen Material gebildet wie die Wandungsteile 214, 215 und 216. Sie kann wie letztere z.B. aus Gummi, Kunststoff oder ähnlichem bestehen. Die mindestens zwei Hohlräume 222 und 262 des mindestens einen Ausgleichselement 221 liegen übereinander. Der eine Hohlraum 262, z.B. der obere Hohlraum, enthält eine inkompressible, in Horizontalrichtung relativ leicht bewegliche, z.B. verschiebliche, Masse als Füllung 264, die einen besonders guten Druckausgleich bewirkt. Diese Masse besteht z.B. aus Flüssigkeit, einer plastischen Masse od.dgl.. Der andere Hohlraum 222, z.B. der untere Hohlraum, enthält eine lastübertragende Masse analog den vorangegangenen Ausführungsbeispielen. Diese Füllung 224 besteht daher z.B. aus nicht kompressiblem Material in Form einer unter Druckbelastung fließfähigen Masse wie bei den vorangegangenen Ausführungsbeispielen auch. Diese Masse bsteht aus einer körnigen Masse, z.B. aus Sand, oder statt dessen aus einer plastischen Masse, z.B. aus Kitt, einer kittartigen Masse od.dgl.. Der eine, z.B. obere Hohlraum 262 mit der darin enthaltenen Füllung 264 ermöglicht einen besonders guten Druckausgleich, weil die Füllung 264 sich sehr leicht in allen Richtungen des Hohlraums 262 bewegen läßt. Mittels dieses Hohlraumes 262 und der Füllung 264 darin kann auch eine zulässige Toleranzabweichung in der Ebenheit des Bauteils 211 besonders gut und komplett ausgeglichen werden.

Bei einem anderen, nicht gezeigten Ausführungsbeispiel weist der Ausgleichskörper 221 mehr als zwei innere Hohlräume auf. Eine weitere, nicht gezeigte Abwandlung besteht darin, daß die mindestens zwei Hohlräume 222, 262 übereinander und zugleich nebeneinander oder nur nebeneinander verlaufen.

Im übrigen ist die Dichtungseinrichtung 210 in Fig. 3 so gestaltet, wie beim vorangehenden Ausführungsbeispiel auch, so daß die diesbezügliche Beschreibung auch für Fig. 3 gilt. Dabei ist der mindestens eine Ausgleichskörper 221 aus einem geschlossenen Ringteil 241 gebildet.

Bei einem anderen, nicht gezeigten Ausführungsbeispiel hingegen ist abweichend von Fig. 1 bis 3 der mindestens eine Ausgleichskörper 21; 221 aus - in Umfangsrichtung betrachtet - in vorzugsweise gleich großen Abständen voneinander plazierten Einzelelementen gebildet, z.B. aus zumindest drei symmetrisch plazierten Einzelelementen. Hierbei ist der Ausgleichskörper also nur abschnittsweise vorhanden, z.B. in drei gleich großen Abständen. Dadurch werden die Vertikalkräfte, z.B. Druckkräfte,über drei Flächen übertragen, die zweckmäßigerweise so bemessen sind, daß die Flächenpressung nicht zu hoch wird. In den Bereichen, wo kein Lastübertragungselement vorhanden ist, besteht zwischen den Stoßflächen ein gewisser Sicherheitsabstand, so daß etwaige dortige Unebenheiten nicht aneinanderstoßen und dadurch Punktbelastungen vermieden sind.

Bei einem Verfahren zur Herstellung eines Bauteils 11; 211, insbesondere Formteils aus z.B. Beton, Polymerbeton, Faserbeton od.dgl., z.B. eines Straßen- oder Hofablaufs, Schachtrings, Schachthalses, Schornsteinelements, Wand- oder Mauerelements, Rohres, Vortriebsrohres, Benzinabscheiders od.dgl. wird so vorgegangen, daß bereits bei der Formgebung des Bauteils 11; 211, insbesondere des Betonformteils, in dessen Material eine Dichtungseinrichtung 10; 210 eingearbeitet wird, insbesondere einbetoniert wird, die in zuvor beschriebener Weise gemäß Fig. 1 bis 3 ausgebildet ist.

## Patentansprüche

1. Dichtungseinrichtung an einem Bauteil, insbesondere Formteil, aus z.B. Beton, Polymerbeton, Faserbeton od.dgl., z.B. Straßen- oder Hofablauf, Schachtring, Schachthals, Schornsteinelement, Wand- oder Mauerelement, Rohr, Vortriebsrohr, Benzinabscheider od.dgl., mit zumindest einem - bedarfsweise als Dichtkörper wirksamen-Ausgleichskörper, der mindestens einen inneren Hohlraum mit einer Füllung aus nicht kompressiblem Material enthält und bereits bei der Formgebung des Bauteils in das Material des Bauteils als Ringteil einbetoniert ist,
**dadurch gekennzeichnet,**
daß sich an den mindestens einen Ausgleichskörper ( 21;221) zumindest an einer Seite als Fortsatz eine damit einstückige Kompressionsdichtung ( 30;230) in Form eines Dichtungsringes anschließt, die zusammen mit dem Ausgleichskörper ( 21;221) im Bauteil ( 11;211) einbetoniert ist.

2. Dichtungseinrichtung nach Anspruch 1,
**dadurch gekennzeichnet,**
daß die Kompressionsdichtung (30;230) mit ihrer Außenfläche einen weiteren Flächenteil der bauteilseitigen Endfläche ( 48) bildet oder über diese Endfläche (248) übersteht.

3. Dichtungseinrichtung nach Anspruch 1 oder 2,
**dadurch gekennzeichnet,**
daß der mindestens eine Ausgleichskörper ( 21) zumindest im wesentlichen flächenbündig im Bauteil ( 11) eingearbeitet ist.

4. Dichtungseinrichtung nach Anspruch 1 oder 2,
**dadurch gekennzeichnet,**
daß der mindestens eine Ausgleichskörper (221) über die Fläche (246; 248) des Bauteils (211) übersteht.

5. Dichtungseinrichtung nach einem der Ansprüche 1 bis 4,
**dadurch gekennzeichnet,**
daß der mindestens eine Ausgleichskörper (221) im Bereich einer in Horizontalrichtung innen verlaufenden Stirnfläche (246) und/oder außen verlaufenden Stirnfläche (247) des Bauteils (211) eingearbeitet ist.

6. Dichtungseinrichtung nach einem der Ansprüche 1 bis 5,
**dadurch gekennzeichnet,**
daß der mindestens eine Ausgleichskörper (21; 221) am unteren Ende des Bauteils (11; 211),insbesondere in der Glocke oder Muffe eines Schachtringes, eingearbeitet ist.

7. Dichtungseinrichtung nach einem der Ansprüche 1 bis 6,
**dadurch gekennzeichnet,**
daß der mindestens eine Ausgleichskörper (21; 221) zumindest einen Verankerungsteil (18; 218) aufweist, der beim Einarbeiten in das Material des Bauteils (11;211) eingearbeitet, insbesondere einbetoniert, wird.

8. Dichtungseinrichtung nach einem der Ansprüche 1 bis 7,
**dadurch gekennzeichnet,**
daß der mindestens eine Ausgleichskörper ( 21;221) an seiner nicht eingearbeiteten Außenseite ( 17 ;217) zumindest eine verformbare Dichtlippe ( 26;226) aufweist, die mit dem Ausgleichskörper ( 21;221) einstückig ist.

9. Dichtungseinrichtung nach einem der Ansprüche 1 bis 8,
**dadurch gekennzeichnet,**
daß der mindestens eine Ausgleichskörper ( 21;221) schlauchartig ausgebildet ist.

10. Dichtungseinrichtung nach einem der Ansprüche 1 bis 9,
**dadurch gekennzeichnet,**
daß der mindestens eine Ausgleichkörper ( 21; 221) aus einem geschlossenen Ringteil ( 41; 241) gebildet ist und mit seiner Außenseite Ringflächen bildet.

11. Dichtungseinrichtung nach einem der Ansprüche 1 bis 10,
**dadurch gekennzeichnet,**
daß der mindestens eine Ausgleichskörper (21; 221) aus in Umfangsrichtung betrachtet in vorzugsweise gleich großen Abständen voneinander plazierten Einzelelementen gebildet ist, z.B. aus zumindest drei symmetrisch plazierten Einzelelementen.

12. Dichtungseinrichtung nach einem der Ansprüche 1 bis 11,
**dadurch gekennzeichnet,**
daß der mindestens eine Ausgleichskörper ( 21; 221) Wandungen aus verformungsfähigem Material, z.B. aus Gummi oder Kunststoff, aufweist.

13. Dichtungseinrichtung nach einem der Ansprüche 1 bis 12,
**dadurch gekennzeichnet,**
daß der mindestens eine Ausgleichskörper (21; 221) im Durchmesser zumindest geringfügig kleiner als ein formgebender Ringteil (140) bemessen und vor der Einarbeitung in das Bauteil (11; 211) mit Vorspannung und gleichzeitiger Abdichtung auf dem Ringteil (140) gehalten ist.

14. Dichtungseinrichtung nach einem der Ansprüche 1 bis 13,
**dadurch gekennzeichnet,**
daß die Kompressionsdichtung ( 30;230) sich im Bereich der von einer Stirnfläche ( 46;246) überleitenden Innenfläche ( 48;248), z.B. Keilfläche, erstreckt.

15. Dichtungseinrichtung nach einem der Ansprüche 1 bis 14,
**dadurch gekennzeichnet,**
daß die Kompressionsdichtung ( 30;230) zumindest auf einem Querschnittsteil innere Hohlräume (144;244) enthält.

16. Dichtungseinrichtung nach einem der Ansprüche 1 bis 15,
**dadurch gekennzeichnet,**
daß ein unteres Bauteil ( 12; 212), insbesondere Betonteil, auf dessen oberes Spitzende ( 49; 249) ein oberes Bauteil (11; 211), insbesondere Betonteil, welches am unteren Ende zumindest den eingearbeiteten, mindestens einen Ausgleichskörper ( 21; 221) trägt, mit dem unteren Ende aufgesetzt ist, hinsichtlich des Flächenverlaufs (153, 51; 253, 251) seines Spitzendes ( 49; 249) dem Flächenverlauf ( 46, 48; 246, 248) der unterseitigen Glocke unter Einbeziehung des darin eingearbeiteten mindestens einen Ausgleichskörpers ( 21; 221) zumindest im wesentlichen entspricht.

17. Dichtungseinrichtung nach einem der Ansprüche 1 bis 16,
**dadurch gekennzeichnet,**
daß der mindestens eine Ausgleichskörper 21; 221) in mindestens einem Hohlraum (22; 222) eine Füllung (24; 224) aus nicht kompressiblem Material in Form einer unter Druckbelastung fließfähigen Masse enthält.

18. Dichtungseinrichtung nach Anspruch 17,
**dadurch gekennzeichnet,**
daß die Masse aus einer körnigen Masse, z.B. aus Sand, besteht.

19. Dichtungseinrichtung nach Anspruch 17,
**dadurch gekennzeichnet,**
daß die Masse aus einer plastischen Masse, z.B. aus Kitt oder aus einer kittartigen Masse, besteht.

20. Dichtungseinrichtung nach einem der Ansprüche 1 bis 19,
**dadurch gekennzeichnet,**
daß der mindestens eine Ausgleichskörper (221) zumindest zwei innere Hohlräume (222, 262) aufweist, die durch eine Wandung (263) getrennt sind und unterschiedliche Füllungen (224, 264) enthalten.

21. Dichtungseinrichtung nach Anspruch 20,
**dadurch gekennzeichnet,**
daß die Wandung (263) verformungsfähig ist, vorzugsweise aus dem gleichen Material wie die Wandungsteile (214, 215, 216) des mindestens einen Ausgleichskörpers (221) besteht, z.B. aus Gummi oder Kunststoff.

22. Dichtungseinrichtung nach einem der Ansprüche 20 bis 21,
**dadurch gekennzeichnet,**
daß die mindestens zwei Hohlräume (222, 262) übereinanderliegen.

23. Dichtungseinrichtung nach einem der Ansprüche 20 bis 22,
**dadurch gekennzeichnet,**
daß der eine Hohlraum (262), z.B. der obere Hohlraum (262), eine inkompressible, in Horizontalrichtung relativ leicht bewegliche, z.B. verschiebliche, Masse als Füllung (264) enthält, die einen guten Druckausgleich bewirkt, z.B. eine Flüssigkeit, eine plastische Masse od.dgl..

24. Dichtungseinrichtung nach einem der Ansprüche 20 bis 23,
**dadurch gekennzeichnet,**
daß der andere Hohlraum (222),z.B. der untere Hohlraum (222), eine lastübertragende Masse, z.B. Sand, Kitt, kittartige Masse od.dgl., als Füllung (224) enthält.

25. Schachtring, **gekennzeichnet** durch eine integrierte Dichtungseinrichtung ( 10;210) nach einem der Ansprüche 1 bis 24.

## Claims

1. Sealing arrangement on a structural member, in particular a formed part, for example, made of concrete, polymer concrete, fibre concrete or similar, e.g. a road or yard gully, tubbing ring, taper shaft ring, chimney element, wall or outside wall element, pipe, advancing pipe, fuel trap or similar, with at least one equalising member - active as sealing member, if required - which contains at least one inner cavity with a filling made of non-compressible material and which is already cemented into the material of the structural member as a ring part during forming of the structural member, characterised in that a compression seal (30; 230) integral to the at least one equalising member (21; 221) in the form of a sealing ring adjoins it at least on one side as an extension, said compression seal being cemented into the structural member (11, 211) together with the equalising member (21; 221).

2. Sealing arrangement according to Claim 1, characterised in that with its outer face the compression seal (30; 230) forms a further surface part of the end face (48) on the structural member side or protrudes above this end face (248).

3. Sealing arrangement according to Claim 1 or 2, characterised in that the at least one equalising member (21) is worked into the structural member (11) at least to be essentially flush.

4. Sealing arrangement according to Claim 1 or 2, characterised in that the at least one equalising member (221) protrudes above the surface (246; 248) of the structural member (211).

5. Sealing arrangement according to one of Claims 1 to 4, characterised in that the at least one equalising member (221) is worked into the region of a face (246) of the structural member (211) running inwards in horizontal direction and/or a face (247) thereof running outwards.

6. Sealing arrangement according to one of Claims 1 to 5, characterised in that the at least one equalising member (21; 221) is worked in on the lower end of the structural member (11; 211), in particular in the bell-shaped portion or bushing of a tubbing ring.

7. Sealing arrangement according to one of Claims 1 to 6, characterised in that the at least one equalising member (21; 221) has at least one anchoring part (18; 218) which is worked in, in particular cemented in, during working into the material of the structural member (11; 211).

8. Sealing arrangement according to one of Claims 1 to 7, characterised in that on its outside (17; 217), which is not worked in, the at least one equalising member (21; 221) has at least one deformable sealing lip (26; 226) which is integral with the equalising member (21; 221).

9. Sealing arrangement according to one of Claims 1 to 8, characterised in that the at least one equalising member (21; 221) is constructed in the manner of a flexible tube.

10. Sealing arrangement according to one of Claims 1 to 9, characterised in that the at least one equalising member (21; 221) is formed from a closed ring part (41; 241) and forms ring faces with its outside.

11. Sealing arrangement according to one of Claims 1 to 10, characterised in that the at least one equalising member (21; 221) is formed from individual elements preferably placed at equal distances from one another, viewed in circumferential direction, e.g. is formed from at least three symmetrically placed individual elements.

12. Sealing arrangement according to one of Claims 1 to 11, characterised in that the at least one equalising member (21; 221) has walls made of deformable material, e.g. rubber or plastic.

13. Sealing arrangement according to one of Claims 1 to 12, characterised in that the at least one equalising member (21; 221) is dimensioned to have a diameter at least slightly smaller than a shaping ring part (140) and before working into the structural member (11; 211) is held on the ring part (140) with pre-stressing and simultaneous sealing.

14. Sealing arrangement according to one of Claims 1 to 13, characterised in that the compression seal (30; 230) extends in the region of the inner face (48; 248), e.g. wedge face, leading up from a face (46; 246).

15. Sealing arrangement according to one of Claims 1 to 14, characterised in that the compression seal (30; 230) contains inner cavities (144; 244) at least on one cross-sectional part.

16. Sealing arrangement according to one of Claims 1 to 15, characterised in that a lower structural member (12; 212), in particular a concrete part, onto the upper pointed end (49; 249) of which an upper structural member (11; 211), in particular a concrete part, which at least supports the worked in, at least one equalising member (21; 221) on the lower end, is attached with the lower end, at least essentially corresponds with respect to the surface shape (153, 51; 253, 251) of its pointed end (49; 249) to the surface shape (46, 48; 246, 248) of the bell-shaped portion on the underside including the at least one equalising member (21; 221) worked into it.

17. Sealing arrangement according to one of Claims 1 to 16, characterised in that in at least one cavity (22; 222), the at least one equalising member (21; 221) contains a filling (24; 224) of a non-compressible material in the form of a flowable mass on application of pressure.

18. Sealing arrangement according to Claim 17, characterised in that the mass is composed of a granular mass, e.g. sand.

19. Sealing arrangement according to Claim 17, characterised in that the mass is composed of a plastic mass, e.g. putty or a putty-like mass.

20. Sealing arrangement according to one of Claims 1 to 19, characterised in that the at least one equalising member (221) has at least two inner cavities (222, 262) which are separated by a wall (263) and contain different fillings (224, 264).

21. Sealing arrangement according to Claim 20, characterised in that the wall (263) is capable of deformation, is preferably made of the same material as the wall parts (214, 215, 216) of the at least one equalising member (221), e.g. is made of rubber or plastic.

22. Sealing arrangement according to one of Claims 20 to 21, characterised in that the at least two cavities (222, 262) are superposed.

23. Sealing arrangement according to one of Claims 20 to 22, characterised in that one cavity (262), e.g. the upper cavity (262), contains a non-compressible mass, which is relatively easily movable, e.g. displaceable, in horizontal direction, as filling (264), which effects favourable pressure compensation, e.g. a liquid, a plastic mass or similar.

24. Sealing arrangement according to one of Claims 20 to 23, characterised in that the other cavity (222), e.g. the lower cavity (222), contains a load-transmitting mass, e.g. sand, putty, putty-like mass or similar, as filling (224).

25. Tubbing ring characterised by an integrated sealing arrangement (10; 210) according to one of Claims 1 to 24.

## Revendications

1. Dispositif d'étanchéité sur un élément de construction, en particulier un élément façonné, par exemple en béton, béton de polymère, béton de fibres ou matériau analogue, par exemple un avaloir de chaussée ou de cour, un anneau de puits, un col de puits, un élément de cheminée, un élément de mur, un tuyau, un tube de fonçage, un séparateur d'essence ou un élément semblable, comportant au moins un corps de compensation, faisant au besoin fonction de corps d'étanchéité, qui contient au moins une cavité remplie d'une matière incompressible et est scellé sous forme d'élément annulaire dans la matière de l'élément de construction dès le façonnage de celui-ci, caractérisé par le fait qu'au corps de compensation ou à chaque corps de compensation (21 ; 221) est joint au moins sur un côté, comme appendice, un joint annulaire à compression (20 ; 230) qui fait corps avec lui et est scellé dans l'élément de construction (11 ; 211) conjointement avec le corps de compensation (21 ; 221).

2. Dispositif d'étanchéité selon la revendication 1, caractérisé par le fait que la surface extérieure du joint à compression (30 ; 230) forme une partie supplémentaire de la surface d'extrémité (48) de l'élément de construction ou fait saillie de cette surface d'extrémité (248).

3. Dispositif d'étanchéité selon l'une des revendications 1 et 2, caractérisé par le fait que le ou chaque corps de compensation (21) est scellé au moins sensiblement à fleur dans l'élément de construction (11).

4. Dispositif d'étanchéité selon l'une des revendications 1 et 2, caractérisé par le fait que le ou chaque corps de compensation (221) fait saillie de la surface (246, 248) de l'élément de construction (211).

5. Dispositif d'étanchéité selon l'une des revendications 1 à 4, caractérisé par le fait que le ou chaque corps de compensation (221) est scellé dans la zone d'une surface frontale s'étendant intérieurement et horizontalement (246) et/ou d'une surface frontale s'étendant extérieurement (247) de l'élément de construction (211).

6. Dispositif d'étanchéité selon l'une des revendications 1 à 5, caractérisé par le fait que le ou chaque corps de compensation (21 ; 221) est scellé à l'extrémité inférieure de l'élément de construction (11 ; 211), en particulier dans la cloche ou l'emboîture d'un anneau de puits.

7. Dispositif d'étanchéité selon l'une des revendications 1 à 6, caractérisé par le fait que le ou chaque corps de compensation (21 ; 221) présente au moins un élément d'ancrage (18 ; 218) qui, lors du scellement, est scellé dans la matière, en particulier le béton, de l'élément de construction (11 ; 211).

8. Dispositif d'étanchéité selon l'une des revendications 1 à 7, caractérisé par le fait que le ou chaque corps de compensation (21 ; 221) présente sur son côté extérieur non scellé (17 ; 217) au moins une lèvre d'étanchéité déformable (26 ; 226) qui fait corps avec lui.

9. Dispositif d'étanchéité selon l'une des revendications 1 à 8, caractérisé par le fait que le ou chaque corps de compensation (21 ; 221) est du genre gaine.

10. Dispositif d'étanchéité selon l'une des revendications 1 à 9, caractérisé par le fait que le ou chaque corps de compensation (21 ; 221) est formé d'un élément annulaire fermé (41 ; 241) et son côté extérieur forme des surfaces annulaires.

11. Dispositif d'étanchéité selon l'une des revendications 1 à 10, caractérisé par le fait que le ou chaque corps de compensation (21 ; 221) est formé d'éléments séparés de préférence également espacés dans la direction circonférentielle, par exemple d'au moins trois éléments séparés placés symétriquement.

12. Dispositif d'étanchéité selon l'une des revendications 1 à 11, caractérisé par le fait que le ou chaque corps de compensation (21 ; 221) présente des parois en matière déformable, par exemple en caoutchouc ou en plastique.

13. Dispositif d'étanchéité selon l'une des revendications 1 à 12, caractérisé par le fait que le ou chaque corps de compensation (21 ; 221) a un diamètre au moins légèrement inférieur à celui d'un élément annulaire de façonnage (140) et, avant son scellement dans l'élément de construction (11 ; 211), est tenu sur l'élément annulaire (140) avec contrainte et en même temps étanchéité.

14. Dispositif d'étanchéité selon l'une des revendications 1 à 13, caractérisé par le fait que le joint à compression (30 ; 230) s'étend dans la zone de la surface intérieure (48 ; 248), par exemple inclinée, qui part d'une surface frontale (46 ; 246).

15. Dispositif d'étanchéité selon l'une des revendications 1 à 14, caractérisé par le fait que le joint à compression (30 ; 230) contient des cavités (144 ; 244) sur au moins une partie de sa section.

16. Dispositif d'étanchéité selon l'une des revendications 1 à 15, caractérisé par le fait qu'un élément de construction inférieur (12 ; 212), en particulier un élément en béton, sur l'extrémité supérieure pointue (49 ; 249) duquel est posé par son extrémité inférieure un élément de construction supérieur (11 ; 211), en particulier un élément en béton, qui porte à son extrémité inférieure au moins un corps de compensation scellé (21 ; 221), correspond au moins sensiblement en ce qui concerne l'allure de la surface (153, 51 ; 253, 251) de son extrémité pointue (49 ; 249) à l'allure de la surface (46, 48 ; 246, 248) de la cloche inférieure, y compris le ou les corps de compensation (21 ; 221) scellé(s) dans cette dernière.

17. Dispositif d'étanchéité selon l'une des revendications 1 à 16, caractérisé par le fait que le ou chaque corps de compensation (21 ; 221) contient dans au moins une cavité (22 ; 222) un remplissage (24 ; 224) d'une matière incompressible formant une masse fluide sous pression.

18. Dispositif d'étanchéité selon la revendication 17, caractérisé par le fait que la masse est constituée d'une matière en grains, par exemple de sable.

19. Dispositif d'étanchéité selon la revendication 17, caractérisé par le fait que la masse est constituée d'une matière douée de plasticité, par exemple d'un ciment ou d'une matière du genre ciment.

20. Dispositif d'étanchéité selon l'une des revendications 1 à 19, caractérisé par le fait que le ou chaque corps de compensation (221) présente au moins deux cavités (222, 262) qui sont séparées par une cloison (263) et contiennent des remplissages différents (224, 264).

21. Dispositif d'étanchéité selon la revendication 20, caractérisé par le fait que la cloison (263) est déformable et faite de préférence de la même matière que les parties de paroi (214, 215, 216) du ou des corps de compensation (221), par exemple de caoutchouc ou de plastique.

22. Dispositif d'étanchéité selon l'une des revendications 20 et 21, caractérisé par le fait que les cavités (222, 262) sont situées l'une au-dessus de l'autre ou les unes au-dessus des autres.

23. Dispositif d'étanchéité selon l'une des revendications 20 à 22, caractérisé par le fait qu'une cavité (262), par exemple la cavité supérieure (262), contient comme remplissage (264) une matière incompressible mobile relativement facilement dans la direction horizontale qui produit une bonne compensation de pression, par exemple un liquide, une matière douée de plasticité ou une matière analogue.

24. Dispositif d'étanchéité selon l'une des revendications 20 à 23, caractérisé par le fait que l'autre cavité (222), par exemple la cavité inférieure (222), contient comme remplissage (224) une matière transmettrice de charge, par exemple du sable, un ciment, une matière du genre ciment ou une matière analogue.

25. Anneau de puits caractérisé par un dispositif d'étanchéité intégré (10 ; 210) selon l'une des revendications 1 à 24.
